# EUROPEAN PATENT APPLICATION

(11) **EP 3 742 066 A1**
(43) Date of publication of application: **25.11.2020**
(21) Application number: 19176083.4
(22) Date of filing: 23.05.2019
(51) Int. Cl.: F24F 13/28, B01D 46/00, F24F 3/16

(54) **AIR PURIFIER**

(71) Applicant: Koninklijke Philips N.V., 5656 AG Eindhoven (NL)
(72) Inventor: ZHANG, Qiushi, 5656 AE Eindhoven (NL)
(74) Representative: de Haan, Poul Erik

(57) **Abstract**

An air purifier has a design which opens and closes. An expandable filter expands and compresses when the air purifier is opened and closed. A fan arrangement is used to drive ambient air though the expandable filter. This provides a design which is portable in the closed configuration and which provides effective filtering in the open configuration.

## Description

### FIELD OF THE INVENTION

This invention relates to air purifiers and filter for the air purifiers, and in particular, it relates to portable air purifiers and its filters.

### BACKGROUND OF THE INVENTION

There are many different designs of air purifier for both household and business use. A common design of air purifier is based on a centrifugal blower which pushes air through a filter cartridge to remove particles and gaseous contaminants.

Due to size constraints of the components, mainly the filter and blower, it is difficult to design current air purifier models into a smaller and lighter structure. Thus, there are difficulties in designing a portable air purification solution.

A portable air purifier would of course be desirable, since the same apparatus could be used in different environments and locations, thereby avoiding the need for duplicated apparatus, and thus reducing cost. It would also allow a user to bring their own air purifier to a location where no air purification function is provided.

### SUMMARY OF THE INVENTION

The invention is defined by the claims.

According to examples in accordance with an aspect of the invention, there is provided an air purifier, comprising:
a first outer wall;
a second outer wall; and
an expandable filter extending between the first and second outer walls and which defines a closed internal filter volume, wherein the first and second outer walls are adjustable between an open configuration with the expandable filter expanded and a closed configuration with the expandable filter compressed; and
a fan arrangement for driving ambient air though the expandable filter between the inside of the closed internal filter volume and the ambient surroundings.

This air purifier comprises a hinged arrangement allowing the overall structure to be rotationally opened and closed. The amount by which the outer walls are opened or closed determines the size of an air distribution area.

In the closed configuration, the air purifier is compact and therefore easily portable, with a reduced need for storage space. It may be carried in a bag or suitcase. It may for example be designed to fit in a small bag, for example with a wall area less than 1000cm² (e.g. 30cm x 20cm) and a thickness less than 10cm.

When in the closed configuration, the first and second outer walls may also provide protection for the enclosed filter against damage when the air purifier is stored or transported.

In the open configuration, a large filter area is provided. A larger filter area correlates with a long filter lifetime, so that desired long time intervals between changing the filter can be provided (e.g. with filter replacement every 6 months). It also gives a low air flow resistance, so that to deliver a given air flow, a low cost fan may be used with a low pressure head, thereby reducing the required size, weight, noise level, power consumption, and cost of use.

There may be a single fan or multiple fans. The multiple fans may for example comprise a fan associated with each outer wall, or even multiple fans associated with each outer wall.

In one set of examples, the first and second outer walls are parallel and the filter is expanded by moving them away from each other and the filter is compressed by moving them towards each other. In another example, the first and second outer walls are not connected through a coupling mechanism such as a hinge, and the filter is expanded by moving them away from each other and the filter is compressed by moving them towards each other. In a specific example, the first and second walls are not parallel to each other.

In another set of examples, the air purifier comprises a hinge arrangement coupling the first and second outer walls.

The overall structure may then be considered to be similar to a book, which can be opened and closed. When opened, the expandable filter opens in an arc to extend between the covers (i.e. the outer walls).

The air purifier may for example be opened to any angle from closed to close to fully open (i.e. 360 degrees). For example, the outer walls may be opened to a small angle, e.g. less than 90 degrees, to provide a directional flow to a localized area. The outer walls may be opened to 90 degrees to sit against an internal corner. They may be opened to 180 degrees to lie flat on a horizontal surface or be positioned flat against a vertical surface. They may be opened to 270 degrees to fit around an external corner (which may be vertical such as a pair of walls or horizontal such as an edge of a work surface). The outer walls may be opened to 360 degrees, to provide an all-around flow. The air purifier may thus be used in different environments and in different orientations and configurations.

In all examples, the fan may draw air in either direction. Thus, it may draw air from the ambient surroundings through the filter, for example radially or laterally inwardly, and then expel the filtered air (either from the hinge arrangement or through the outer walls), or else it may draw air into the hinge arrangement or in through the outer walls (without filtering) and then expel that air radially or laterally outwardly through the filter.

In the hinged design, the internal filter volume is defined by the first and second outer walls, the hinge arrangement and the expandable filter. In the parallel design or the design without a hinge, the internal filter volume is defined by the first and second outer walls and the expandable filter.

Thus, in all cases the closed internal filter volume is formed behind the expandable filter material. The expandable filter thus forms a continuous structure which is collapsed for the closed configuration and expanded for the open configuration. The fan generates an airflow between that closed volume and the ambient surroundings, through the filter. The closed volume remains closed for all positional settings so that all of the air flow is driven through the filter.

In a first set of examples, the fan comprises a fan mounted at one of the outer walls, or a pair of fans, with one mounted at each of the outer walls. Another option is multiple fans (two or more) mounted at each outer wall, to provide a desired shaping of the flow field to achieve a specific air delivery pattern.

The fan (or fans) then provides a flow path between an outside of one or both of the outer walls and a corresponding inside surface. This inside surface then communicates with the closed volume behind the filter. The hinge arrangement then only needs to provide the desired relative movement of the outer walls.

The or each fan may then comprise an axial fan for generating a flow across the outer wall. This enables a simple and compact filter design. The flow is through the outer wall and into the closed volume, so that the air then has to escape from the closed volume through the filter.

The or each fan may instead comprise a centrifugal fan for generating and coupling a first flow parallel to the outer wall and a second flow perpendicular to the outer wall. The first flow and the second flow do not represent the sequence of the flows, "the first" and "the second" are used in order to distinguish the two flows from each other.

The perpendicular flow couples to the closed volume and the parallel flow couples to the ambient surroundings. The or each outer wall may for example comprise a cavity, and the first (parallel) flow is then a flow to or from the edge of the cavity. In one embodiment using the centrifugal fan, the second flow maybe the perpendicular flow sucking into the air purifier, and the first flow may be the parallel flow flowing out from the fan. In another embodiment using the centrifugal fan, the first flow may be the parallel flow sucking into the air purifier, and the second flow may be the perpendicular flow flowing out from the fan. The direction of the flow is determined by the mounting gesture of the centrifugal fan.

The expandable filter for example comprises an interconnected set of filter sheets extending between the first and second outer walls. The sheets are connected together to form the closed volume but they are able to be moved together and apart to provide the required expansion and compression.

The sheets expand by unfolding and forming pockets and contract by folding and closing the pockets. They may be connected around three sides, for example if the fourth side is closed by a hinge arrangement. They may be connected all around (e.g. around four sides) if the fan delivers air through an opening in the central region of the outermost sheets. For example, the filter may be formed from a single concertinaed sheet to define edge interconnections and with additional interconnections at the top and bottom. Alternatively, the filter may be formed as separate individual sheets which are bonded together to form the overall structure. The sheets open and close like a bellows, retaining a closed internal volume. This design creates a large surface area for the filter. The more open the configuration, the less the flow resistance caused by the filter arrangement and the larger the area over which flow is created.

Each filter sheet may comprise an outer shape with an inner cut-out portion, wherein the cut-out portions together form a mixing chamber within the closed volume. The fan then provides a coupling between the ambient surroundings and the mixing chamber, so that a more even flow results across the area of the filter. The space formed by the cut-out portions may also be used to accommodate electronics or fan modules, which further decreases the overall size.

In a second set of examples having a hinge arrangement, the hinge arrangement comprises a centrifugal fan, for generating and coupling a first flow parallel to the hinge axis and a second flow radial to the hinge axis.

In this design, the hinge arrangement incorporates the fan. In this example, the fan has an inlet or outlet along the hinge axis, and a radial outlet or inlet. Thus, the fan can either draw air in along the hinge axis and expel air into the closed volume, or it can draw air in radially from the closed volume and expel it along the hinge axis.

In a third set of examples having a hinge arrangement, the hinge arrangement comprises a tangential fan, for generating and coupling a first flow radial to the hinge axis and a second flow radial to the hinge axis. In this design, the hinge arrangement again incorporates the fan. In this example, the fan has a radial inlet and outlet. Thus, at one angular location around the hinge arrangement air is drawn in radially, and at another angular location around the hinge arrangement, air is expelled radially.

In these designs, the hinge arrangement may comprise two of the fans with a shared fan motor between them. This provides a compact arrangement with a fan at each end of the hinge arrangement.

The hinge arrangement may further comprise a flow directing arrangement for defining the first and second flows. The flow directing arrangement for example comprises flow directing sheets which are used (in combination with the fan rotation direction and fan blade design) to define the inlet and outlet flow paths.

In the second and third sets of examples, the expandable filter may again comprise an interconnected set of filter sheets extending between the first and second outer walls.

Each filter sheet is for example spaced from the hinge arrangement such that the spaces together form a mixing chamber within the closed volume. This mixing chamber is formed as a portion of an annulus between the hinge arrangement and the filter. Again, it helps to ensure flow to the full area of the filter.

In all examples, the expandable filter may be removable for cleaning or replacement or the expandable filter and the first and second outer walls may be removable for cleaning or replacement.

The fan may be adapted to turn off automatically in response to the air purifier being in the closed configuration. In this way, in order to turn off the fan and stop using the air purifier, a user is only required to close the air purifier, an action that is already required for storing or transporting the air purifier.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figures 1A and 1B show two possible examples of an air purifier in a closed configuration;
Figures 2A and 2B show the two possible examples of the air purifier of Figures 1A and 1B in an open configuration;
Figures 3 (a) to 3(c) show the air purifier of Figure 2A configured to various angles;
Figures 4A and 4B show the use of an axial fan or fans;
Figures 5A and 5B show the use of a centrifugal fan or fans;
Figure 6 shows the outer walls with an opening in which, or over which, a respective fan is to be mounted;
Figure 7 shows an example in which the hinge arrangement comprises a pair of centrifugal fans;
Figure 8 shows an example in which the hinge arrangement comprises a pair of tangential fans;
Figure 9 shows a cross sectional view from above of Figure 8, to show a mixing chamber; and
Figure 10 shows a flow directing arrangement.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an air purifier having a design which opens and closes. An expandable filter expands and compresses when the air purifier is opened and closed. A fan arrangement of one or more fans is used to drive ambient air though the expandable filter. This provides a design which is portable in the closed configuration and which provides effective filtering in the open configuration.

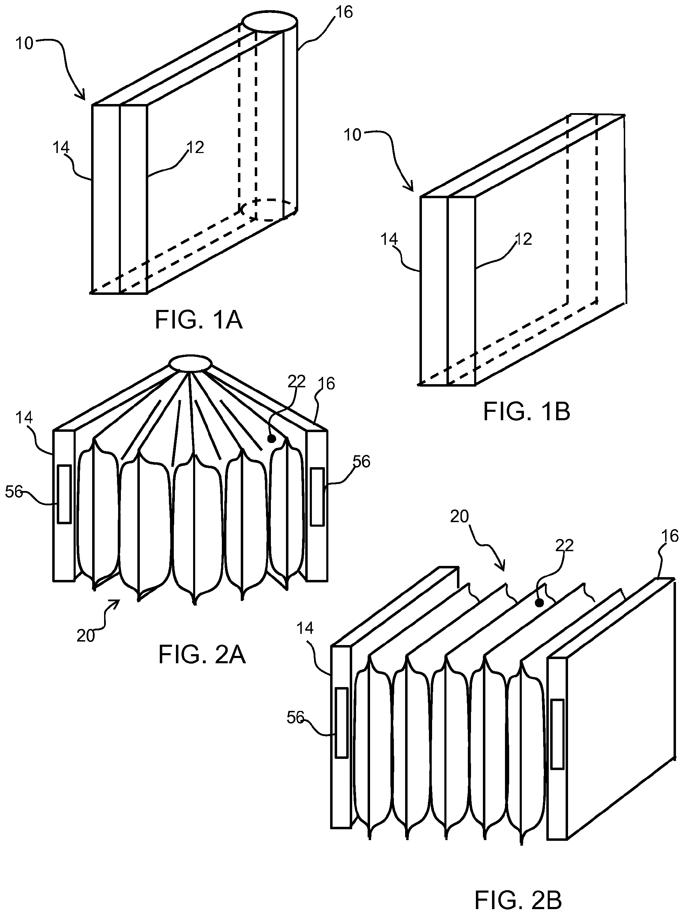

Figures 1A and 1B show two possible examples of the air purifier in its closed configuration. The air purifier 10 comprises a first outer wall 12 and a second outer wall 14. The arrangement of Figure 1A also has a hinge arrangement 16 coupling the first and second outer walls.

An expandable filter extends between the first and second outer walls 12, 14. In the closed configuration, the expandable filter is compressed and is enclosed by the outer walls and protected by them. The air purifier is compact and therefore easily portable. The wall area is for example less than 1000cm² (e.g. 30cm x 20cm) and the overall structure may have a thickness less than 10cm.

Figures 2A and 2B show the two examples of the air purifier in its open configuration. The filter 20 can be seen in its expanded state.

The amount by which the outer walls 12, 14 are opened or closed is adjustable by the user. The resulting space between the outer walls forms an opening, and this opening defines an air distribution area. Air may be drawn into this opening for filtering by the filter 20 or it may be expelled from this area after filtering by the filter 20.

In the open configuration, the filter expands in the manner of a bellows. Thus, it unfolds and thereby presents a large filter surface area. The filter however provides a continuous barrier between the ambient surroundings and an internal closed volume behind the filter.

Figure 2A shows an implementation with a hinge so that the two outer walls open and close like a book. Figure 2B shows an implementation in which the two outer walls pull apart or together along a direction perpendicular to the outer walls themselves.

The filter for example comprises a set of filter sheets 22 which are connected together. An adjacent pair of filter sheets define an air pocket, and the overall filter comprises a set of these air pockets. The air pockets are connected together and their internal volumes are interconnected. The opening and closing of the air pockets results in the expansion and compression of the filter structure.

The connections between sheets/pockets allow the creation of the closed volume. When the air purifier is opened, the pockets open.

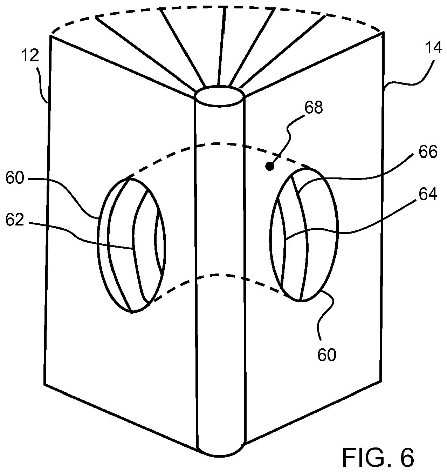

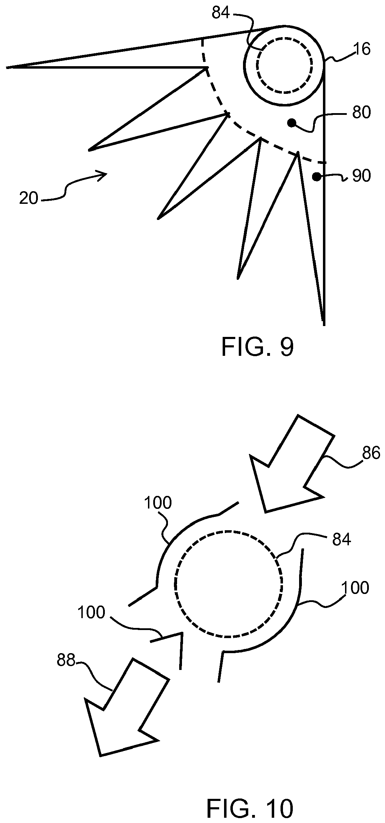

For the version of Figures 1A and 2A, the pockets are formed by connections around three sides (i.e. all sides apart from at the hinge). Thus, they open and close like a bellows, retaining a closed internal volume. The pockets may be connected together near the hinge arrangement thus defining a set of radial pockets (see Figure 9), or they may connected at a more central location (see Figure 6). When connected at a central location, the pockets may be formed by connections all around the periphery of a pair of adjacent sheets.

For the version of Figures 2A and 2B, the pockets are formed all around the structure, so access to the internal volume is from a central area (see Figure 6).

Thus, various designs are possible for the bellows type filter structure, providing a filter layer with an interface between an internal volume and the ambient surroundings, and the structure can be opened and closed.

The bellows design gives rise to a larger filter area than a conventional corrugated filter cartridge.

The filter sheets are for example formed of a High Efficiency Particulate Air (HEPA) layer to remove particles from the air stream, and one or more supporting layers to increase sheet mechanical strength. A typical thickness of the individual sheet may range from 0.2 - 0.4 mm depending on number of layers and the materials selected.

The sheets have the flexibility to deform but the strength and durability to retain their structure after multiple compression and expansion operations.

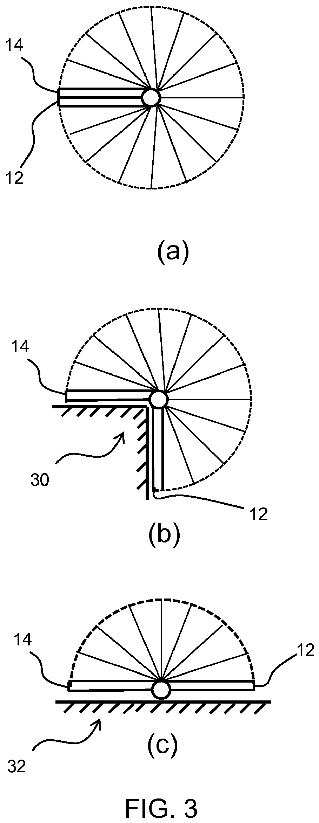

Figure 3 shows that the air purifier of Figures 1A and 2A may be configurable to any angle.

Figure 3(a) shows the outer walls be opened to a full 360 degrees, to provide an all-around flow. For example, the air purifier may be stood upright and deliver flow all around.

Figure 3(b) shows the outer walls opened to 270 degrees to fit around an external corner 30.

Figure 3(c) shows the outer walls opened to 180 degrees to lie flat on a horizontal surface 32 or be positioned flat against a vertical surface.

The air purifier may be wall mounted, suspended, positioned on a flat surface or ceiling mounted.

A fan arrangement is used to drive air through the filter. It may comprise a single fan in most simple implementation, or it may make use of multiple fans.

In a first set of examples (which may be applied to both types of design of Figures 1A, 1B, 2A and 2B), the fan comprises a fan mounted at one of the outer walls, or a pair of fans, with one mounted at each of the outer walls.

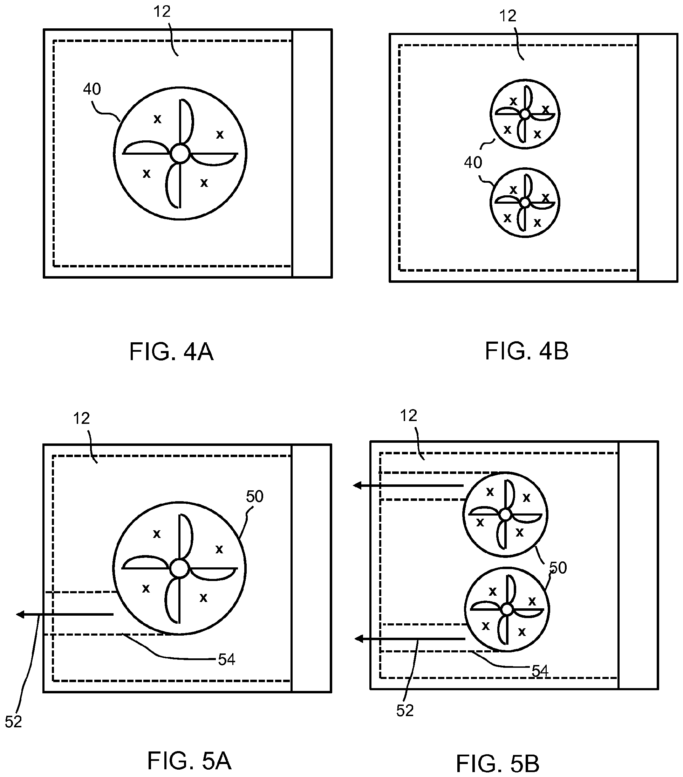

Figure 4A shows a single axial fan 40 mounted on the first outer wall 12. On one side of the fan is the ambient surroundings, and on the other side of the fan is the closed volume behind the filter. The axial fan 40 drives air perpendicularly through the outer wall 12. There may be one fan on each outer wall.

Figure 4B shows two axial fans 40 mounted on the first outer wall 12, to provide a different flow pattern.

Figure 5A shows a single centrifugal fan 50 for generating and coupling a first flow 52 parallel to the outer wall and a second flow perpendicular to the outer wall.

The perpendicular flow again couples to the closed volume behind the filter and the parallel flow 52 couples to the ambient surroundings. The outer wall may then comprise a cavity, and the parallel flow is then a flow out from the fan and in turn flow out from the edge of the cavity for example along a channel 54 formed in that cavity. The fan may then not be visible at all, but may be a part of the internal structure of the outer wall. The channel leads to a channel opening (shown as 56 in Figure 2) along the front edge of the outer wall.

Figure 5B shows two centrifugal fans 50 mounted on the first outer wall 12, to provide a different flow pattern.

Figure 6 shows that in one design (which may again be applied to both types of design of Figures 1A, 1B, 2A and 2B) the outer walls 12, 14 each have an opening 60 in which, or over which, a respective fan is to be mounted.

Furthermore, the set of filter sheets which form the filter each also have an outer shape with an inner cut-out portion 62, 64, 66. The cut-out portions together form a mixing or distribution chamber 68 within the closed volume behind the filter. The fan then provides a coupling between the ambient surroundings and the mixing chamber 68, so that a more even flow results across the area of the filter.

In alternative designs suitable for the type of design of Figures 1A and 2A, the fan is integrated into the hinge arrangement.

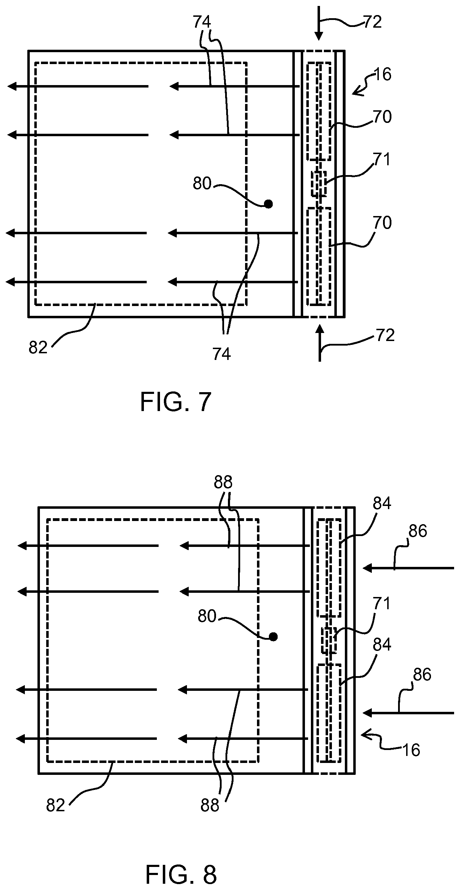

Figure 7 shows an example in which the hinge arrangement 16 comprises a pair of centrifugal fans 70 (there may be only one), each for generating and coupling a first flow 72 parallel to the hinge axis and a second flow 74 radial to the hinge axis. A motor 71 drives the pair of fans.

In the example shown, the fans draw air in axially along the hinge axis, and expel air radially. However, the fan may instead draw air in from the closed volume and expel the air along the hinge axis.

A mixing chamber is again formed which provides an interface between the hinge arrangement and the filter pockets. Each filter sheet or pocket defines a volume which is for example spaced from the hinge arrangement 16 such that the spaces together form the mixing chamber 80 within the closed volume. This mixing chamber is thus formed as a portion of an annulus between the hinge arrangement and the filter. Again, it helps to ensure flow to the full area of the filter. The dotted outline 82 represents the location of each individual pocket.

Figure 8 shows an example in which the hinge arrangement 16 comprises a pair of tangential fans 84 (there maybe only one). As in the example of Figure 7, the two fans may be driven by a shared motor 71. The tangential fans are for generating and coupling a first flow 86 radial to the hinge axis and a second flow 88 radial to the hinge axis. The hinge arrangement again incorporates the fan. In this example, the fan has a radial inlet and outlet. Thus, at one angular location around the hinge arrangement 16 air is drawn in radially, and at another angular location around the hinge arrangement, air is expelled.

Figure 9 shows a cross sectional view from above of Figure 8, to show the mixing chamber 80 which forms part of the general closed volume 90 (which is closed at the top and bottom as well).

The hinge arrangement may further comprise a flow directing arrangement 100 as shown in Figure 10 for defining the first and second flows. The flow directing arrangement 100 for example comprises flow directing sheets which are used (in combination with the fan rotation direction and fan blade design) to define the inlet and outlet flow paths.

There may be a single inlet path and a single outlet path, or else multiple outlet paths may be defined, such as two outlet paths as shown in Figure 10.

In all examples, the expandable filter 20 may be removable for cleaning or replacement. It may be detachably connected to the outer walls for this purpose.

Alternatively, the expandable filter and the first and second outer walls may be removable for cleaning or replacement as a unit. The most important part to be reusable is the fan and its associated electronics. For example, the hinge arrangement (with the integrated fan and electronics) may be one part and the filter and optionally also outer walls may be another separate part.

The different designs above will be suitable for different scenarios. For example, the version of Figure 4 may not operate when laid flat on a surface, whereas the design of Figure 5 allows this. If the air purifier is intended to be stood upright on a flat surface, it may be appropriate to have a fan which draws air in or expels air only from the top of the hinge arrangement, instead of using both ends. For the example of Figure 8, the inlet or outlet to the ambient surroundings from the hinge arrangement may not be at the back of the hinge arrangement, so that one of the outer walls may be laid flat on a surface without impeding the flow 86.

The fan electronics may be used to implement various functions.

For example the fan may be adapted to turn off automatically in response to the air purifier being in the closed configuration.

In this way, in order to turn off the fan and stop using the air purifier, a user is only required to close the air purifier, an action that is already required for storing or transporting the air purifier.

The air purifier may be opened and closed manually, but this may also be motor driven under the control of the user. In addition, the air purifier can also be provided with an air quality sensor and output device, such as a light with the light color indicating levels of air quality.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. An air purifier (10), comprising:
a first outer wall (12);
a second outer wall (14); and
an expandable filter (20) extending between the first and second outer walls and which defines a closed internal filter volume, wherein the first and second outer walls are adjustable between an open configuration with the expandable filter expanded and a closed configuration with the expandable filter compressed; and
a fan arrangement (40, 50, 70, 84) for driving ambient air though the expandable filter between the inside of the closed internal filter volume and the ambient surroundings.

2. An air purifier as claimed in claim 1, wherein the fan arrangement comprises a fan (40, 50) mounted at one of the outer walls, or a pair of fans, with one mounted at each of the outer walls, or multiple fans mounted at each of the outer walls.

3. An air purifier as claimed in claim 2, wherein the or each fan comprises an axial fan (40) or a centrifugal fan (50)

4. An air purifier as claimed in any one of claims 2 to 3, wherein the expandable filter comprises an interconnected set of filter sheets (22) extending between the first and second outer walls.

5. An air purifier as claimed in claim 4, wherein each filter sheet comprises an outer shape with an inner cut-out portion (62, 64, 66), wherein the cut out portions together form a mixing chamber (68) within the closed volume.

6. An air purifier as claimed in any one of claims 1 to 5, comprising a hinge arrangement coupling the first and second outer walls.

7. An air purifier as claimed in claim 6, wherein the closed internal filter volume (90) is defined by the first and second outer walls, the hinge arrangement and the expandable filter.

8. An air purifier as claimed in claim 6 or 7, wherein the hinge arrangement comprises a centrifugal fan (70) of the fan arrangement, for generating and coupling a first flow parallel to the hinge axis and a second flow radial to the hinge axis.

9. An air purifier as claimed in claim 6 or 7, wherein the hinge arrangement comprises a tangential fan (84) of the fan arrangement, for generating and coupling a first flow radial to the hinge axis and a second flow radial to the hinge axis.

10. An air purifier as claimed in claim 8 or 9, wherein the hinge arrangement comprises two fans of the fan arrangement with a shared fan motor (71) between them.

11. An air purifier as claimed in claim 8, 9 or 10, wherein the hinge arrangement further comprises a flow directing arrangement (100) for defining the first and second flows.

12. An air purifier as claimed in any one of claims 8 to 11, wherein the expandable filter comprises an interconnected set of filter sheets (22) extending between the first and second outer walls and wherein each filter sheet is spaced from the hinge arrangement such that the spaces together form a mixing chamber (80) within the closed volume.

13. An air purifier as claimed in any one of claims 1 to 12, wherein:
the expandable filter is removable for cleaning or replacement; or
the expandable filter and the first and second outer walls are removable for cleaning or replacement.

14. An air purifier as claimed in any one of claims 1 to 13, wherein the fan is adapted to automatically turn off in response to the air purifier being in the closed configuration.

15. An expandable filter applied in an air purifier in accordance with any one of the previous claims.
